# EUROPEAN PATENT APPLICATION

(11) **EP 3 922 566 A1**
(43) Date of publication of application: **15.12.2021**
(21) Application number: 20179529.1
(22) Date of filing: 11.06.2020
(51) Int. Cl.: B64F 1/32, B64F 1/36

(54) **A SYSTEM AND A METHOD OF TRANSPORTING LUGGAGE**

(71) Applicant: BBHS A/S, 2640 Hedehusene (DK)
(72) Inventor: Paldavicius, Dovydas, 2300 København S (DK); Bargum, Jonas Riddersholm, 5000 Odense C (DK)
(74) Representative: Inspicos P/S

(57) **Abstract**

A system and a method of transporting luggage, such as in an airport, where luggage is stored in a central luggage storage facility from which a number of pieces of luggage is identified which will fit on a cart ordered to an outlet at which the identified luggage is output, so that the outlet is freed as soon as the luggage is loaded on to the cart. The cart may be autonomous.

## Description

The present invention relates to a system and a method for transporting luggage and in particular for a method and system for hauling luggage in an airport.

In airports, efficiency has to be high in order to keep the airplanes on the wings and so as to not waste space on the ground. The present invention relates to solutions ensuring that the luggage may be transported to the airplanes without wasting space in the luggage storing facilities and without requiring more luggage transporting carts than necessary.

In a first aspect, the invention relates to a system for transporting luggage, such as to an airplane, the system comprising:
- a central luggage storage facility,
- a plurality of luggage outlets configured to receive pieces of luggage from the central luggage storage facility,
- a plurality of luggage carts configured to receive luggage from the outlets and deliver the luggage to an airplane, each luggage cart being configured to:
   - move to any of the outlets and
   - receive luggage from the outlet,
- a controller configured to:
   - identify an outlet and a predetermined amount of luggage in the central facility,
   - control the central facility to feed the identified luggage to the identified outlet, and
   - output information to the effect that one of the plurality of carts should move to the identified outlet and receive the identified luggage.

In the present context, the system may be provided as a number of elements configured to operate together. Preferably, the present system forms part of the luggage handling system of an airport, train station or the like.

A piece of luggage may be any type of luggage, such as a suitcase, but also merchandise and the like packed in boxes. Other types of luggage is sports equipment and other products which are often not packed in suitcases but in special purpose bags. Often, pieces of luggage are elements carried by persons for transport on the airplane/train or the like together with the person. Often, persons have one, two or three pieces of luggage. In a preferred embodiment, the pieces of luggage is the luggage which is not carried with the person in the passenger compartment but is to be transported in the hull or cargo bay of the airplane or the like.

The central luggage storage facility may be of any type known. A number of such facilities exist, such as using endless belts, trays holding the luggage and being moved around in the system and stored, such as in racks, pater noster systems or the like. The central luggage storage facility may be configured to hold any number of luggage, such as no less than 100 suitcases, no less than 500 suitcases or the like.

The central facility may be configured to receive luggage from other portions of the system, such as luggage receipt means, such as check-in counters, from scanning equipment, such as security scanning equipment, or the like.

A luggage outlet is configured to receive pieces of luggage from the central facility and deliver these to luggage carts. An outlet may itself be a luggage storing element, however often aimed at short time storage, such as in the order of minutes. Thus, the outlet may be configured to hold a limited amount of luggage. The luggage outlet may be configured to hold no more luggage than the amount of luggage which may be received by a luggage cart, such as that luggage cart of the plurality of luggage carts which is capable of holding the largest amount of luggage.

The luggage outlet may be of a legacy type such as an endless belt from which the luggage may be manually fed to the cart. Alternatively, the outlet and cart may be configured to transfer the luggage automatically, such as when the cart has a surface configured to receive luggage transferred automatically from the outlet. In this manner, hard manual labour may be avoided.

Clearly, the outlet may utilize any manner for receiving, storing and transferring the luggage to the cart.

A plurality of outlets are provided, each capable of receiving luggage from the central facility. The central facility may be configured to transfer luggage directly to an outlet, or additional means may be provided for handling this transport. Many types of luggage transport are known, such as endless belts or the transport of trays holding the luggage, and multiple manners are known for controlling the path taken by luggage, such as tilting trays, pushers or the like.

Any number of outlets may be used. The number of outlets may be determined based on the amount of luggage which is to be carried by the carts, which again relates to the number of and sizes of airplanes to be serviced, as well as the amount of time during which an outlet is blocked by received but not yet picked-up luggage. Preferably, the luggage is forwarded and received in a just-in-time fashion so that the luggage has only just arrived at the outlet when the cart is there ready for pick-up so that the outlet immediately is ready to receive a new quantity of luggage for another cart.

In this manner, it is also seen that the amount of luggage identified and fed to an outlet preferably does not exceed the amount of luggage which may be received by the identified cart, so that after delivery to the cart, the output may receive a new quantity of luggage for another cart.

Clearly, the outlet may be capable of holding more luggage than that receivable by one cart. The outlet may be capable of holding a quantity of luggage for one cart and for receiving the next quantity of luggage for another cart, so that when the first quantity is delivered to the first cart, the luggage for the next cart is ready. In that manner, receipt of luggage at an outlet will not delay the operation of the system.

It is noted that in this manner, any outlet may be identified for receiving a quantity of luggage for any airplane. Naturally, an outlet may be determined which is close to the airplane so as to limit transport time between the outlet and the airplane. Alternatively, an outlet may be identified which is empty/ready or will be the soonest. Further alternatively, as will be described further below, an outlet may be selected which will be able to receive the luggage and at which the cart will be present, at a predetermined point in time or as soon as the cart is able to reach the outlet.

A plurality of luggage carts are provided. The number of luggage carts provided may be determined based on the amount of luggage to be received from the outlets and the amount of time it takes until a cart is again ready to receive luggage. In airports, the luggage received by a cart from the system is usually to be delivered at an airplane. Thus, a period of time is spent travelling to the airplane and for unloading the luggage. Also, a cart may, when empty, be directed to the same or another airplane for picking up luggage from a just landed airplane and for delivery to the luggage handling system of the airport. Then, once empty, the cart is again ready to receive luggage and may be directed to the outlet identified.

The carts are able to deliver luggage to an airplane. In this manner, the carts may be of a legacy type from which the luggage is delivered to an airplane in a manual fashion, such as when the luggage is manually transported from the cart to the airplane or to a transporting device configured to transport luggage up to and/or into the airplane.

Alternatively, the cart may be configured to automatically transfer luggage to a loading system capable of receiving the luggage from the cart and feed the received luggage into the airplane without human intervention or at least without a human lifting or carrying the luggage. Automatic loaders and unloaders exist which are able to handle individual pieces of luggage and containers with luggage.

A cart may be a legacy cart with a tractor unit and one or more trailers each capable of holding a number of pieces of luggage. The tractor unit is controllable by a person and has an interface of the type seen in cars, golf carts and the like.

Alternatively, the carts, as described below, may be self-propelled and even autonomous so that no humans are required for at least being in the vicinity of the carts.

The carts are capable of moving to an outlet and receive the luggage therefrom. Thus, the carts should be able to move around, such as when comprising a drive unit, often a motor or engine, as well as navigation elements, such as rotatable wheels or the like allowing the cart to move to any desired and required location.

The carts are able to receive and deliver luggage. Thus, the carts may have one or more surfaces which are capable of holding luggage. The carts may comprise means for automatically receive and/or deliver such luggage if desired.

The controller may be a single unit, such as a computer or server, or the controller functionality may be distributed to multiple units. Controller functionality may be performed in a remote facility and/or a cloud solution if desired.

The controller is configured to identify a cart. The controller preferably is capable of identifying an empty or ready cart so that this cart may be immediately requested to move to the identified outlet.

The amount of luggage identified may be an amount of luggage which may be received by the cart which is to move to the outlet. Different carts may be configured to receive different amounts of luggage, so that the controller may base the identification of the amount of luggage on the cart identified. In addition or alternatively, the identified cart may not be completely empty so that the amount of luggage identified is an amount of luggage which may be received in addition to an amount of luggage already carried by the cart.

Thus, the amount of luggage receivable by a cart may be predetermined, or the cart may be able to communicate this to the controller.

The outlet identified may be an outlet which is empty or ready or which may be so when the cart arrives at the outlet. Clearly, if the outlet already holds luggage, such luggage may be delivered to other carts during the time required for the cart and the identified luggage to arrive at the outlet. Thus, the period of time required for the identified luggage to travel from the central facility to the outlet may be taken into account as well as the period of time required for the cart to move to the outlet. Then, the position of the cart may also be taken into account when identifying an outlet.

The amount of luggage may be determined as one or more particular pieces of luggage, or a predetermined number of pieces of luggage may be requested from the central facility. Alternatively, a predetermined volume of luggage may be requested. The central facility preferably comprises information relating to which pieces of luggage it holds and e.g. a destination thereof, a flight number, a priority level and the like. Thus, as is described further below, a particular type of luggage may be requested.

Basically, the luggage requested for a cart often is destined for the same airplane.

The controller is configured to output information to the effect that a cart is to move to the identified outlet and receive the identified luggage. This information may be output to a human operator of the cart so that the operator drives the cart to the identified outlet. Alternatively, the information may be fed to the cart itself, such as when the cart is self-propelled or even autonomous.

The information may simply be an outlet number, a position thereof or the like. The information may additionally specify a point in time at which the cart is to be at the outlet, so that the identified luggage has arrived but will not have to wait.

Autonomous or self-propelled carts may simply need a destination and may then find their own way to the destination. Paths, routes or roads may be laid down from which the carts may not deviate. Especially in airports, a strict separation of the carts and the airplanes is highly desired.

Further alternatively or additionally, the information may, autonomous, human operated or otherwise, comprise information about a route to take from a present position of the cart to the outlet. This route may be determined based on the amount of time the trip is allowed to take, to avoid congested spots or the like. Route planning is known and is highly interesting in the present system as it will normally utilize a large number of carts, many outlets, many airplanes and a strict timing schedule.

In one embodiment, each luggage cart is configured to output a signal when able to receive luggage, and wherein the controller configured to receive the signal from one of the plurality of carts and then perform the identifying and controlling steps. In this manner, a cart automatically will notify the controller when able to receive luggage. This information is then not required entered by a human operator of the cart or a human unloading the cart e.g. at an airplane

Naturally, a number of manners exist of determining that a cart is empty or ready to receive luggage. In one manner, the weight of any luggage carried may be determined. In other situations, a volume of luggage carried may be determined. Also, the presence of luggage may be determined. In other systems, the amount of luggage received and delivered may be kept track of.

The communication between the controller and the carts preferably is wireless, such as via WiFi, Bluetooth, LoRa, GSM, radio waves, optically or the like.

Preferably, the carts are autonomous. In this manner, a cart may be fed a location to move to, where after the cart may find its way there itself. The controller may additionally feed a route to the cart so that the cart will follow that route. Determining the route may aid in ensuring that the cart arrives at the destination at a desired point in time. Fully autonomous carts may take too long if taking the wrong route. Also, controlling the routes of the carts may avoid congestion at key paths or intersections.

Often, the carts will be allowed to only move along predetermined paths or roads in order to ensure that the carts to not move on to the paths reserved for the airplanes. This will further tend to generate congestion of the carts, which may then be avoided by route planning.

The carts may comprise positioning determining elements, such as GPS units, or the like for determining the position of the cart. The carts may also comprise other navigation or safety sensors such as proximity sensors and the like for preventing a cart from hitting other carts, persons, aircraft or the like. Such sensors and navigation is known in the art.

The sensors may also aid the cart in staying on a desired route or road so that the cart will not stray away therefrom.

A cart may be autonomous in the sense that when provided with a destination or route, the cart will find its own way there. Alternatively, the cart may be self-propelled but controlled more closely by e.g. the controller which may receive the output of the sensors so as to control the operation and navigation of the cart.

Naturally, the controller may output altered information to a cart, such as an altered route, if unforeseen events occur, such as a person, vehicle or the like blocking a route of a cart, or if a cart breaks down and blocks a busy road.

In one embodiment, the controller is further configured to output information to the cart having received the identified luggage, relating to an unloading position to move to. As described above, this information may be given to a human operator driving the cart, or the information may be fed to the cart so that the cart is able to move to the new destination being the unloading position. Clearly, the above considerations apply when transporting luggage away from the outlet.

In one situation, the controller is configured to divide pieces of luggage in the central storage facility into fractions of luggage and identify pieces of luggage of a single fraction of luggage.

Luggage may have different ultimate destinations and/or different priorities. Thus, different pieces of luggage may need more or less urgent handling when unloaded from an airplane. Some types of luggage need urgent handling and thus are desired unloaded from the airplane first. Then, it may be desired to load such luggage on to the airplane the last, so that this luggage is the closest to the cargo hatch and thus may be unloaded first from the plane.

Urgent or high priority luggage is luggage which is not ultimately destined for the present airport but which is to be transferred to another airplane. Often, passengers are in transit for only a short period of time, so that it is desired that such luggage is unloaded as swiftly as possible in order for that luggage to reach the next airplane in time.

Other urgent luggage is that of priority passengers. Priority passengers often receive their luggage before non-priority passengers so also this luggage is desired unloaded from the airplane as soon as possible.

Then, it may be desired to divide the luggage for an airplane into fractions, one fraction being priority luggage and another fraction being non-priority luggage. More fractions may be defined such as when more shades of urgency is defined.

It may then be desired to first load onto this airplane the luggage of lowest priority and then load luggage of increasing priority.

Then, the controller may keep track of the luggage loaded and/or the luggage still not loaded, such as the luggage for the same flight but still in the central facility, and identify luggage of the desired fraction. When all lower priority luggage has been pulled from the central facility, higher priority luggage may be pulled next.

Clearly, higher priority luggage may be identified first but forwarded to an outlet and on to a cart where the outlet, cart and the overall time required for that luggage to reach the airplane is so long that lower priority luggage may overtake it by being forwarded to an outlet closer to the airplane or on to a faster cart.

As described above, the present system caters for a just-in-time concept. Thus, in one embodiment, the processor is configured to have the identifying and controlling step performed, before the empty cart arrives at the identified outlet. In this manner, the carts may be the scarce resource in the sense that the cart is always or almost always moving. The cart need not wait for the luggage at the outlet but is able to be loaded as soon as it arrives at the outlet.

Naturally, an intricate timing scheme may be defined in which the movement of a cart is predetermined into the future. When the travelling time of the carts and the transfer time of the luggage from the central facility to the outlets is known, the carts and luggage may be controlled in a manner so that one cart may be loading luggage from an outlet while a second cart is already on the way to receive luggage which is already on the way to the same outlet, where the second cart will not arrive before the first cart is loaded and has left and so that the luggage for the second cart has not blocked the outlet for too long.

For example, it may be desired that the processor is configured to have the identifying and controlling steps performed, so that the identified luggage arrives at the identified outlet no more than 180 seconds before the empty cart arrives at the identified outlet. Even stricter timing requirements may be desired up to the point where the last piece of identified luggage for the cart is received and loaded without delay on to the cart.

Preferably, the system further comprises one or more airplanes, where the controller is configured to determine when the airplane is able to receive luggage, the processor being configured to subsequently perform the identifying and controlling steps.

Naturally, airplanes preferably are unloaded using the same carts. The carts may then, in addition to hauling luggage from the outlets to the airplanes, be used for receiving luggage at the airplanes and transport this luggage to the luggage handling system of the airport. This luggage handling system for received luggage may also comprise the central facility of desired. Alternatively, received luggage may be fed into a parallel system configured to receive luggage from the airplanes and return this to the passengers.

Any manner may be used of transporting the luggage from the carts to the delivery system. Automatic delivery is preferred. Any number of inlets may be provided for ensuring that sufficient capacity is available. The inlet may be determined for each cart so that the carts are not caused to wait at the inlets for delivery of the luggage from the airplanes.

One manner of determining when an airplane is empty or ready to receive luggage may be from an amount of luggage already unloaded from the airplane. If the amount on of luggage on the airplane is known, the carts may be configured to inform the controller of the amount of luggage received by each cart, so that the controller may order enough carts to move to the airplane to empty it. Also, the controller will then be able to estimate when the airplane will be empty and then start ordering luggage for the same airplane.

Naturally, the communication, instructions, receipt/delivery of luggage as well as navigation of the carts may be as described above. Thus, in addition to the task of delivering luggage to the airplanes, the carts are also used for receiving luggage from the airplanes. The operation of the carts, paths thereof and the timing of the system may take this into account.

Clearly, also the loading of luggage on to the airplane may a timing factor which is to be taken into account. The loading of luggage often has an upper limit on the amount of luggage which may be loaded per unit of time. Thus, it may be desired to not instruct more carts and more luggage than required so that the number of carts waiting at the airplane for unloading is reduced. The above timing constraint may be used also for unloading so that a cart waits no more than a predetermined period of time at the airplane for unloading of loading of luggage.

As described, the outlets may be positioned close to the airplanes to reduce travelling times of the carts transporting luggage to the airplanes. Also, it may be desired to have a short transit time from the central facility to the outlets so that the system may act swiftly to deliver the luggage identified. Then, for large airports, it may be desired to provide multiple systems each having a central facility and outlets. The multiple central facilities may then be interconnected via a more remote facility from which the luggage is received. This remote facility may also be used for transporting luggage from one central to another such as when an airplane changes gate or when receiving luggage from an airplane which is destined to another airplane handled by another central facility. This remote facility may then also receive luggage from e.g. check-in facilities and luggage destined for the present airport may be fed to this remote facility for feeding to a luggage reclaim area of the airport.

It is usual that smaller airplanes receive the luggage as individual pieces of luggage which is then individually loaded into the airplane, where larger airplanes often are configured to receive the luggage in containers which are loaded in the airport. The luggage may be loaded at the outlets, such that the outlets will receive the luggage and load the luggage into the containers which are either present on the carts or loaded on to the carts. The loading of the containers may be automatic, semi automatic or manual.

Retrieval of luggage from the airplanes thus is also in the form of individual pieces of luggage or containers. If present in containers, the luggage is removed from the containers if all of or some of the luggage therein is destined for the present airport. If destined for another destination and another flight, a container may be transported, such as on a cart, directly to that other flight.

Another aspect of the invention relates to a method of transporting luggage to an airplane, the method comprising:
- storing a plurality of pieces of luggage in a central luggage storage facility having a plurality of luggage outlets,
- providing a plurality of luggage carts each configured to receive luggage from the outlets and deliver the luggage to an airplane, each luggage cart being configured to:
   - move to any of the outlets, and
   - receive luggage from the outlet,
- identifying an outlet and a predetermined amount of luggage in the central facility,
- controlling the central facility to feed the identified luggage to the identified outlet, and
- output information to the effect that the cart should move to the identified outlet and receive the identified luggage.

Naturally, the aspects, embodiments, situations and the like may be exchanged and mixed in any desired manner. Thus, the above considerations relating to the luggage, controller, carts and the like are equally applicable in relation to this aspect of the invention.

The storing of luggage in the central facility may be the adding thereto such as via a conveyor or the like. The central facility may store the luggage on an endless conveyor belt, in a pater noster system, on trays or otherwise. Preferably, the identified pieces of luggage are automatically derivable from the central facility, such as if the central facility is aware of the position of each piece of luggage or if the pieces of luggage has a detectable ID and the central facility has one or more sensors for determining the ID of luggage, so that when the identified luggage passes the sensor, the position thereof may be determined and the piece of luggage may be derived from the central facility and directed toward the identified outlet.

As described above, the movement of a cart may be controlled by a human operator, remotely controlled, or the cart may be autonomous. Thus, the information output may be output to the human operator for the human operator to control the cart to drive to the identified outlet. Alternatively, the outputting step may comprise instructing the cart to autonomously move to the predetermined position.

As mentioned above, the receiving of luggage may be a manual operation for transferring the luggage from the outlet to the cart. Preferably, the receiving is automated so that the transferring of luggage takes place without humans lifting the luggage. In one embodiment, the transfer of luggage is fully automated so that no human intervention is required.

In one embodiment, the method further comprises the step of a luggage cart outputting a signal when able to receive luggage, and wherein the identifying and controlling steps are performed subsequent to the outputting of a signal. Thus, when the cart reports that it is able to receive luggage, luggage may be identified as may an outlet, where after the cart is instructed to move to the identified outlet.

Preferably, the method further comprises the step of outputting information to the cart having received the identified luggage to move to a predetermined position. Again, this information may be provided to a human operator, such as via a display, a radio or the like, so that the operator knows where to go with the luggage. Alternatively, the cart may receive the information and itself, more or less autonomously, drive to the predetermined position. Often, the predetermined position is a loading position of an aircraft such as a loading position of a loading lift/elevator or of a loading belt.

In one situation, the method further comprises the step of dividing luggage in the central storage facility into fractions of luggage, wherein the identifying step comprises identifying luggage of a single fraction of luggage. As mentioned above, the identifying step may then comprise identifying luggage of a lower priority before identifying luggage of a higher priority.

When the luggage identified is to be loaded into containers, it may be preferred to load luggage of the same priority into the same container(s) so that as few containers as possible need be unloaded to unload all high priority luggage from an airplane after arrival.

In one situation, the identifying and controlling steps are performed before the empty cart arrives at the identified outlet. In fact, it may be preferred that the identified luggage has arrived before the cart arrives at the outlet, so that the cart need not wait for the arrival of the luggage.

In on embodiment, the identifying and controlling steps are performed, so that the identified luggage arrives at the identified outlet no more than 180 seconds before the empty cart arrives at the identified outlet.

In one embodiment, the method further comprises the step of the controller determining when an airplane is able to receive luggage. After that, the controller performs the identifying and controlling steps. Naturally, the airplane may itself output a signal to the effect that it is ready to receive luggage. Alternatively, the controller may determine that the airplane is ready to receive luggage, such as from knowledge of that the airplane has been unloaded or that the airplane will be unloaded within a predetermined period of time. When the controller is able to foresee when the airplane will be unloaded, it may start identifying luggage, outlets and carts so that the first loaded cart arrives at the airplane as soon as the airplane has been unloaded.

A further aspect of the invention relates to an autonomous cart comprising one or more slanted slides or horizontal shelfs for receiving luggage.

A cart with slanted slides or shelfs may be seen in US8632293, the contents of which are hereby incorporated by reference.

Slanted shelfs may be used for facilitating sliding of luggage downwardly by the action of gravity alone. The shelfs may be made of a plane material with a smooth surface so that only little friction is created. Alternatively, the shelfs may comprise e.g. rollers allowing movement with gravity.

At the bottom of each shelf, a blocking element may be provided which may prevent the luggage from leaving the shelf before this is intended, such as when an unloading shelf is provided on to which the luggage of the shelf is allowed to slide, such as for loading onto an airplane or onto a conveyor belt of an airport luggage handling system for receiving luggage unloaded from an airplane.

Luggage may be received at an upper end of the shelf and may automatically slide as far down as possible. Some luggage will be stopped by the blocking element. Subsequent luggage will be stopped by earlier received luggage. A predetermined number of pieces of luggage may be fed to a shelf, or luggage may be fed which has a complete length within a total length receivable by the shelf.

An alternative to the slanted shelfs may be more or less horizontal shelfs which instead of gravity assisted movement may comprise one or more endless belts or driven rollers which may be controlled to move the luggage along the shelf. Thus, luggage received at one end of the shelf may be moved to the other end thereof. When the first piece of luggage reaches the end, it will remain there until desired unloaded from the shelf.

Naturally, autonomous may be as defined above, so that the cart is able to receive instructions as to a destination and optionally or additionally a route to take. The cart will then be able to move to the destination without human assistance. The cart may be configured to detect unforeseen obstacles and move around these if desired.

In the following, preferred embodiments will be described with reference to the drawing, wherein:
- Figure 1 illustrates a system for handling luggage in an airport,
- Figure 2 illustrates a first embodiment of a cart for use in the system of figure 1,
- Figure 3 illustrates a second embodiment of a cart for use in the system of figure 1 and
- Figure 4 illustrates a third embodiment of a cart for use in the system of figure 1.

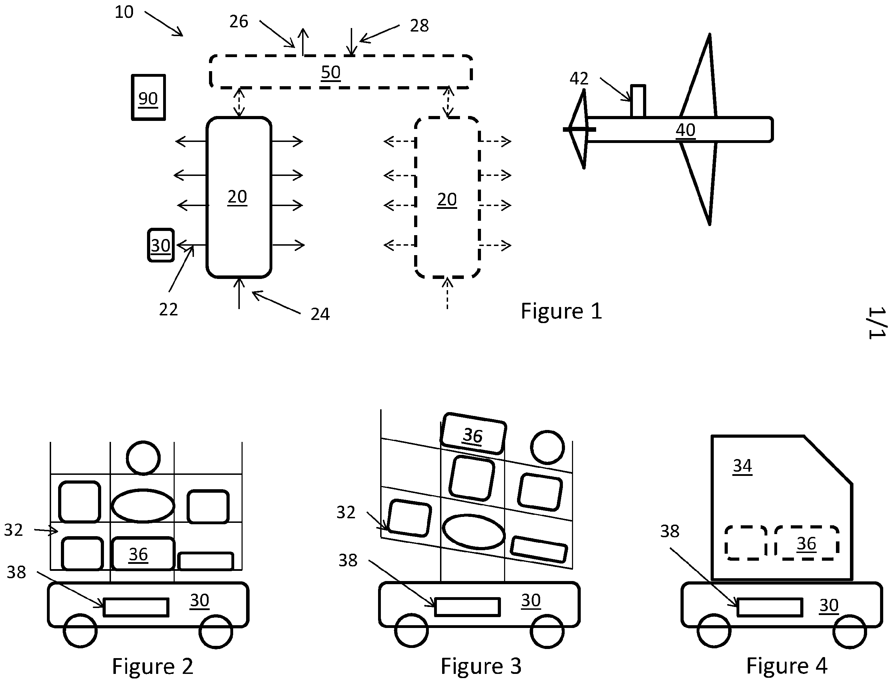

In figure 1, a system 10 is illustrated for handling luggage in an airport. The system comprises a central storage facility 20 capable of receiving and holding a plurality of pieces of luggage. The facility 20 may be based on any technology such as a revolving belt, a pater noster system, racks or the like holding the luggage in a matrix fashion or the like.

The facility 20 has a plurality of outlets 22 from to which luggage may be fed and loaded on to carts 30 for transporting the luggage to an airplane 40.

In the preferred embodiment, the carts 30 are autonomous in the sense that when provided with a destination, they will be able to navigate to the destination without human assistance. In another embodiment, the carts are self propelled and remotely navigated by a controller 90.

Different types of aircraft take the luggage in different manners. Smaller aircraft require the luggage provided as individual pieces of luggage whereas larger aircraft are configured to receive containers in which a number of pieces of luggage are provided.

A cart is configured to receive a predetermined number of pieces of luggage or a known volume of luggage. Clearly, a cart may be of the type of the legacy tractor pulling a sequence of trailers, but this is difficult especially when the carts are autonomous and/or remotely controlled, as the precise positioning of the trailers is not ensured so that automatic loading and unloading may be made impossible. The preferred cart has one or more loading surfaces fixed in relation to a chassis which is propelled and controlled. This is described further below.

A controller 90 is provided for controlling the operation of the storage facility 20, the outlets 22 and the carts 30, so that when a cart is ready to receive luggage, the storage facility 20 is controlled to deliver a volume or a number of pieces of luggage to an outlet 22 which is ready, so that the empty cart may go there and receive the luggage. When the amount of luggage delivered to the outlet may be received by the cart, the outlet is immediately ready to service another cart and another amount of luggage. The controller may determine the location of the cart and/or the time it will take for the cart to arrive at the outlet. Then, the controller may control the storage facility to deliver the luggage so that the luggage is ready at the outlet 22 when the cart arrives. In this manner, the cart is not required to wait for the luggage. When the cart is more or less in constant movement, less carts will be able to service more outlets, luggage and airplanes.

When the cart is configured to hold less luggage than is required on an airplane, the luggage for an airplane may be delivered by multiple carts. Then, the luggage may be divided into fractions, such as luggage for priority passengers, non-priority passengers and passengers which will be in transit at the destination airport. Then, the luggage with the lowest priority may be fed into the airplane first, so that the most urgent luggage may be the closest to the cargo hatch and thus be unloaded first at the destination. Thus, the controller may, when instructing the storage facility to feed luggage to an outlet, take this into account and select luggage with the same urgency or priority or luggage with an increasing urgency with the lowest urgency/priority first.

The agility of the system may depend on the time it may take for the luggage to move from the storage facility to the outlet. If this time is too long, the cart may have to wait, or the luggage may have to be ordered for the whole airplane, which could block one or more outlets until all the luggage therein has been picked up by carts. On the other hand, if the distance from the outlet to the airplane is too large, the carts will use a lot of time driving, so that each cart will be able to transport fewer pieces of luggage per hour. Thus, it may be desired to provide multiple storage facilities 20 so that these may be positioned strategically in larger airports, such as closer to the gates or the airplanes. Thus, the delivery time from the storage facility to the outlet may be smaller and the distance from the outlet to the airplane may be smaller.

Then, a remote storage facility 50 may be provided for receiving the luggage from the check-in counters 28 and forwarding the relevant luggage to the individual storage facility 20. Usually, luggage check-in must be completed so much in advance that there is ample time to transfer the luggage from the remote storage facility to the central storage facility.

If no remote storage facility is provided, luggage from the check-in counters may be fed directly to the central storage facility 20.

Clearly, all other operations of airports, such as luggage security scanning, may be performed at any path along the path of the luggage, such as at the remote storage facility if provided.

The controller 90 may receive an instruction that an airplane 40 is ready for receiving luggage and may then select an empty or available outlet, select an empty cart, instruct the empty cart to navigate to the selected outlet and instruct the storage facility 20 to forward a first batch of luggage to the selected outlet. Automatic loading and unloading of the cart is preferred, such as seen in WO2016/107844.

Then, when the empty cart reaches the outlet, the luggage is ready and will fit in the cart, which then may without delay be redirected toward the relevant airplane. Thus, the outlet 22 will have a small buffer for the luggage. This buffer need not be larger than to be able to store the luggage for a single cart. Clearly, an outlet may have space for luggage for multiple carts, so that the luggage for one cart may be loaded on to the cart while the luggage for a next cart is being received.

The controller may additionally control the carts so that carts will not wait or not wait for extended periods of time at the airplane. It may be predicted how the carts will move and how fast they will be loaded and unloaded so that if a cart would wait for too long at one airplane, it would not be instructed to be loaded with luggage for that plane, and that luggage would then not be requested from the storage facility. That cart may then be used for other tasks, such as for transporting luggage to another plane or for transporting luggage from a plane.

Clearly, the airplanes should also be unloaded, and the carts may be used for that purpose also. An input 24 may be provided into the central storage facility 20 to which luggage unloaded from airplanes may be fed to the storage facility. Such luggage may be destined for this airport and thus fed to an output 28 to a baggage reclaim area of the airport. Alternatively, the luggage may be in transit to be loaded on to another airplane, whereby the luggage may be fed to and stored in the storage facility 20 or the remote storage facility 50 for later transport to the correct storage facility, outlet, cart and airplane.

The carts may be fully autonomous in the sense that they are provided with a destination, such as an outlet, inlet, airplane, loading ramp 42, GPS coordinate or other position in the airport, where after the cart may find its own way there. Naturally, corridors, paths, roads or the like may be defined in the airport along which the carts should or must move. Traffic rules may be defined for maximum velocity, minimum velocity, how to act at intersections (the right of way) and the like. Autonomous carts usually have one or more sensors for determining the position of the cart and/or obstacles in the vicinity of the cart. Such sensors may be based on GPS, Radar, Lidar, Sonar, stereo vision, vision using structured radiation, beacons, markings or signal emitters on/in the ground or the like. The carts may be in communication with each other or the central processor to inform if obstacles are detected, which could also be problematic to other carts, what a particular position of e.g. an airplane or its loading ramp is, if this is not standardized, and the like. Congestion at intersections or busy portions of the airport may be reported or determined so that some carts may decide to take an alternative route to avoid such congested spots. The carts may comprise sensors configured to ensure correct positioning of the cart vis-a-vis an outlet, inlet, airplane or the like to facilitate automatic loading and unloading of the luggage from/to the cart.

In particular, the autonomous cart may comprise a sensor for sensing that the cart is ready to accept luggage, such as that the cart is empty. This sensor may be embodied in many manners, such as a weight gauge sensing the weight of any luggage carried by the cart, optical sensors sensing the presence of any luggage, sensors determining movement of any rotating belts of the cart for sensing that the belts have moved so far that any luggage present would have been removed from the belt. Other sensor types are weight sensors, proximity sensors, or the like. Thus, in this manner, it may be ensured that carts are always operative. As soon as a cart is ready to receive luggage, it may be directed toward an airplane or an outlet to immediately become busy again. In this manner, the carts may be a scarce resource but the operation thereof may be optimized.

Alternatively, the carts may be controlled by the controller which may then determine not only the destination of a cart but also the route to take. Also, the output of any sensors of the cart may then be fed to the processor for handling centrally. This may be both for detecting, avoiding and/or reporting obstacles, for positioning the carts vis-a-vis outlet/inlet/airplane or the like. Thus, the processor may take over the above autonomy of the carts. Then, the processor may also control the loading and unloading of the cart and thus also know when the cart is empty and ready to receive luggage.

As mentioned, different cart types may be used. In figure 2, a cart 30 is illustrated which has a rack comprising a number of reception spaces 32, which may each comprise an endless belt so that each space may comprise a plurality of pieces of luggage 36 extending, in the drawing, along an axis perpendicular to the plane of the drawing. An alternative to the belt is rollers, such as freely rotating rollers or slanted shelfs allowing the luggage to move due to gravity. A luggage handling structure of this type is seen in figure 3 and may be seen in US2010/0129184, which is hereby incorporated by reference.

Clearly, other manners exist of transporting individual pieces of luggage in a manner so that automatic loading and unloading is facilitated.

In figure 4, a cart 30 is illustrated carrying a container 34 comprising therein luggage 36. This container is loaded at the outlet either before being loaded on to the cart or it is loaded while provided on the cart.

The luggage identified for a cart may be ordered or identified based on an amount of luggage or a number of pieces of luggage which the cart may be able to receive. The cart may not be completely empty when signalling for additional luggage.

Different carts may have different sizes or capabilities, so that the amount of luggage identified even for empty carts may differ. The cart may add such information to the signal, or the controller may know of the capability of the cart when identifying the luggage.

The amount of luggage may be a number of suitcases where the standard or maximum sizes of suitcases may be assumed. It may be estimated that a cart or a container may hold a predetermined number of pieces of luggage.

When the cart has one or more belts, the total length of the pieces of luggage may be known and the luggage may be identified on the basis thereof, so that if smaller pieces of luggage are selected, more pieces may fit into the same length.

Also, it the cart has a container, the volume and dimensions of the container may hold more pieces of luggage if these are of a smaller size.

Clearly, the identification of the luggage may be optimized in the sense that the luggage identified may be identified to have as many pieces of luggage, as much weight as possible or as large a volume of luggage as possible within the limits of the cart.

In general, the cart 30 comprises a drive unit 38 comprising e.g. means for creating propulsion of the cart, such as one or more batteries/accumulators/fuel cells or the like as well as one or more motors, such as electrical motors, for driving the cart. The drive unit 38 may also comprise sensors, positioning elements, actuators, or the like for allowing autonomous or automatic operation of the cart, such as navigation to a specified position, automatic loading/unloading of luggage/container or the like. The above sensor for determining whether the cart is able to receive luggage or not may form part of the drive unit 38. The drive unit may be configured to communicate in a wireless manner with the processor 90. The drive unit 38 may be configured to facilitate replenishment, charging or powering of the cart, such as by controlling the cart to move to a position at which an accumulator/battery may be recharged wirelessly or via a wire, or at which a fuel cell or fuel container may be replenished.

Clearly, dimensions of the pieces of luggage may be determined when feeding the luggage on to the central facility. Then, the identification of the luggage may be based not only on destination, airplane and/or priority but also the dimensions, volume or the like thereof. Thus, luggage may be identified which fit into a container 34 with as little waste volume or space as possible. Also, for storage or transport on shelves, luggage may be identified which takes up as much as possible of the shelves. Thus, luggage may be identified the complete length of which is as close to the maximum length supported by a shelf without exceeding that length.

## Claims

1. A system for transporting luggage, the system comprising:
- a central luggage storage facility,
- a plurality of luggage outlets configured to receive pieces of luggage from the central luggage storage facility,
- a plurality of luggage carts configured to receive luggage from the outlets and deliver the luggage to an airplane, each luggage cart being configured to:
- move to any of the outlets and
- receive luggage from the outlet,
- a controller configured to:
- identify an outlet and a predetermined amount of luggage in the central facility,
- control the central facility to feed the identified luggage to the identified outlet, and
- output information to the effect that one of the plurality of carts should move to the identified outlet and receive the identified luggage.

2. A system according to claim 1, wherein each luggage cart is configured to output a signal when able to receive luggage, and wherein the controller configured to receive the signal from one of the plurality of carts and then perform the identifying and controlling steps.

3. A system according to claim 1, wherein the carts are autonomous.

4. A system according to any of claims 1-3, wherein the controller is further configured to output information to the cart having received the identified luggage, relating to an unloading position to move to.

5. A system according to any of the preceding claims, wherein the controller is configured to divide pieces of luggage in the central storage facility into fractions of luggage and identify pieces of luggage of a single fraction of luggage.

6. A system according to any of the preceding claims, wherein the processor is configured to have the identifying and controlling step performed, before the empty cart arrives at the identified outlet.

7. A system according to any of the preceding claims, wherein the processor is configured to have the identifying and controlling steps performed, so that the identified luggage arrives at the identified outlet no more than 180 seconds before the empty cart arrives at the identified outlet.

8. A system according to any of the preceding claims, further comprising one or more airplanes, where the controller is configured to determine when the airplane is able to receive luggage, the processor being configured to subsequently perform the identifying and controlling steps.

9. A method of transporting luggage to an airplane, the method comprising:
- storing a plurality of pieces of luggage in a central luggage storage facility having a plurality of luggage outlets,
- providing a plurality of luggage carts each configured to receive luggage from the outlets and deliver the luggage to an airplane, each luggage cart being configured to:
- move to any of the outlets, and
- receive luggage from the outlet,
- identifying an outlet and a predetermined amount of luggage in the central facility,
- controlling the central facility to feed the identified luggage to the identified outlet, and
- output information to the effect that the cart should move to the identified outlet and receive the identified luggage.

10. A method according to claim 9, further comprising the step of a luggage cart outputting a signal when able to receive luggage, and wherein the identifying and controlling steps are performed subsequent to the outputting of a signal.

11. A method according to claim 9, further comprising the step of outputting information to the cart having received the identified luggage to move to a predetermined position.

12. A method according to claim 9, wherein the outputting step comprises instructing the cart to autonomously move to the predetermined position.

13. A method according to any of claims 9-12, further comprising the step of dividing luggage in the central storage facility into fractions of luggage, wherein the identifying step comprises identifying luggage of a single fraction of luggage.

14. A method according to any of claims 9-13, wherein the identifying and controlling steps are performed, before the empty cart arrives at the identified outlet.

15. A method according to any of claims 9-14, wherein the identifying and controlling steps are performed, so that the identified luggage arrives at the identified outlet no more than 180 seconds before the empty cart arrives at the identified outlet.
